# FASCICULE DE BREVET EUROPEEN

(11) **EP 2 441 223 B1**
(45) Date de publication et mention de la délivrance du brevet: **10.12.2014**
(21) Numéro de dépôt: 10737967.9
(22) Date de dépôt: 08.06.2010
(51) Int. Cl.: H04L 27/26

(54) **PROCEDE ET DISPOSITIFS D'EMISSION ET RECEPTION DE SYMBOLES MULTI PORTEUSE**
Verfahren und Vorrichtungen zum Empfangen und Senden von Mehrträgersymbolen
Method and devices for transmitting and receiving multi-carrier symbols

(30) Priorité: 09.06.2009 FR 0953810
(43) Date de publication de la demande: 18.04.2012
(73) Titulaire: Orange, 75015 Paris (FR)
(72) Inventeur: CARIOU, Laurent, F-35700 Rennes (FR); CHRISTIN, Philippe, F-35000 Rennes (FR); BERNARD, David, F-35560 Marcille Raoul (FR)
(74) Mandataire: Jeune, Pascale
(86) Numéro de dépôt international: PCT/FR2010/051135
(87) Numéro de publication internationale: WO 2010/142909

(56) Documents cités:
- EP-A1- 1 780 966
- EP-A2- 0 734 132
- EP-A2- 0 933 904

## Description

### Domaine de l'invention

La présente invention se rapporte au domaine des télécommunications. Au sein de ce domaine, l'invention se rapporte plus particulièrement aux communications dites numériques. Les communications numériques comprennent en particulier les communications sans fil ; elles comprennent aussi par exemple les communications filaires. Le support de transmission des communications est couramment appelé canal de transmission ou de propagation, à l'origine en référence à un canal aérien et par extension en référence à tout canal.

L'invention concerne les techniques d'émission et de réception.

### Art antérieur

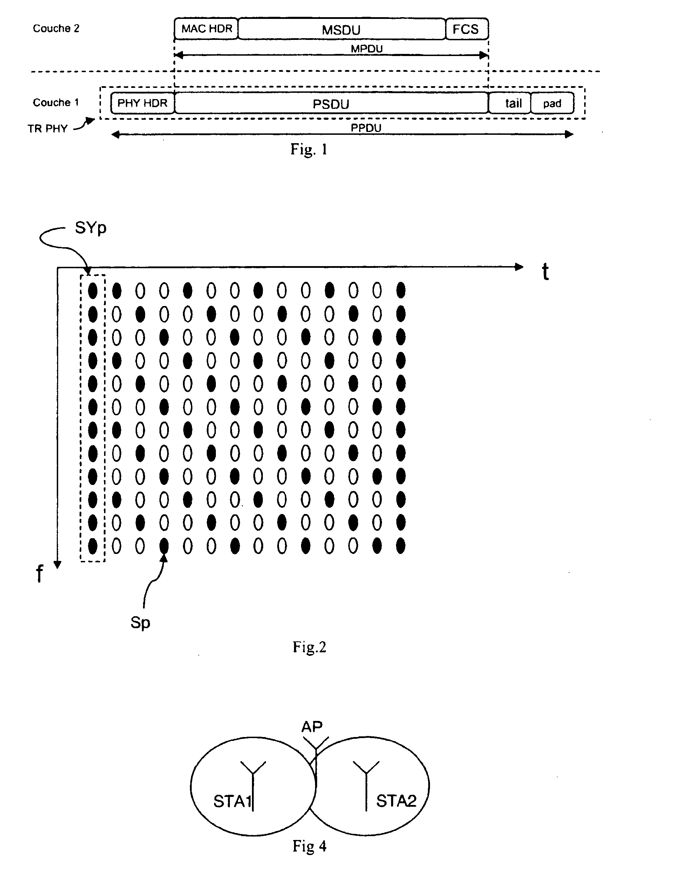

Les systèmes de communication numérique multi porteuses tels que les systèmes de radiocommunication OFDM mettent en oeuvre au niveau de la couche physique, en référence aux découpages en couche selon le modèle OSI, une trame TR PHY illustrée par la figure 1. Son contenu est en partie constitué de données utiles c'est-à-dire liées à des données binaires qui codent l'information d'un signal d'entrée du dispositif d'émission multi porteuses. En sortie du même dispositif, la trame est dite temps fréquence car elle détermine dans le temps l'emplacement des symboles de données utiles et des symboles pilotes sur les différentes porteuses. La figure 2 est une illustration d'une trame de type OFDM ("Orthogonal Frequency Division Multiplexing") avec des symboles de données utiles en blanc et des symboles pilotes Sp en noir.

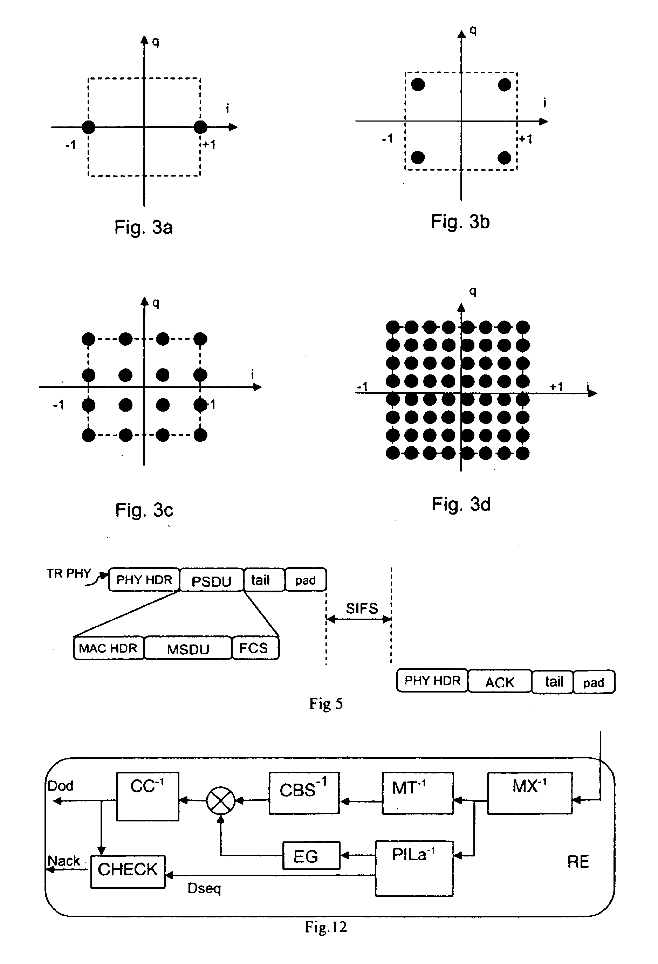

Les procédés d'émission multi porteuses classiques comprennent une étape de transformation des données binaires pour les mettre sous la forme de symboles de données appartenant à une constellation donnée en utilisant une modulation à plusieurs états, par exemple deux états pour une BPSK, quatre états pour une QPSK, 16 états pour une 16QAM, 64 états pour une 64QAM. Les constellations sont classiquement représentées sur un plan à deux axes (i, q) suivant une représentation de Fresnel, les exemples précédents de modulation BPSK, QPSK, 16QAM et 64QAM sont illustrés respectivement par les figures 3a à 3d. L'axe i est associé à la partie réelle des symboles de données et l'axe q à la partie imaginaire des symboles de données.

Dès lors que les données émises sont transmises par un canal de transmission dont les caractéristiques peuvent évoluer dans le temps et l'espace, il est impératif pour le récepteur d'estimer ce canal, afin de pouvoir égaliser le signal reçu et détecter les bits émis. En outre, le référentiel fréquentiel du récepteur obtenu classiquement par l'utilisation d'un oscillateur local est généralement indépendant du référentiel fréquentiel de l'émetteur. Bien que le calage en fréquence des oscillateurs puisse généralement être effectué très précisément, les conditions environnementales (température,...) peuvent faire dériver dans le temps ces oscillateurs et introduire un déphasage variable au cours du temps entre les oscillateurs. D'autres sources de bruit à la réception, en particulier celles générant du bruit thermique impactent le déphasage. Les pilotes introduits à l'émission dans la trame ont pour fonction de permettre au récepteur d'estimer le canal de transmission et d'estimer le déphasage pour pouvoir compenser leurs effets sur les données transmises. Pour limiter l'impact du canal et du bruit sur les pilotes, ceux-ci sont mis en forme avec une fonction de modulation robuste, classiquement une BPSK. En outre, pour limiter l'impact des pilotes sur le PAPR (Peak to Average Power Ratio) la fonction de modulation module généralement une séquence pseudo aléatoire. Dans ce cas, la valeur d'un pilote (+1 ou -1 pour une BPSK) est directement fonction de la séquence pseudo aléatoire ; la connaissance de la fonction de modulation et de la séquence pseudo aléatoire ou du générateur de cette séquence permet de déterminer la valeur du pilote. Pour exploiter les pilotes, le récepteur connaît leur emplacement dans la trame et leur valeur : le récepteur connaît la fonction de modulation utilisée à l'émission et il utilise le même générateur pseudo aléatoire que celui utilisé à l'émission. Ainsi, il suffit au récepteur de comparer le pilote reçu avec la valeur attendue (+1 ou -1 pour une BPSK) à la position attendue dans la trame pour déterminer la variation d'amplitude et la rotation de phase. La trame TR PHY, au niveau couche physique, comprend un entête PHY HDR qui précède le champ PSDU des données. L'entête comprend très souvent un symbole OFDM pilote SYp qui permet d'effectuer une première estimation du canal sur toutes les porteuses. Les symboles OFDM du champ PSDU peuvent alors ne contenir qu'un nombre restreint de pilotes Sp répartis sur quelques porteuses.

Pour satisfaire les besoins constants d'augmentation de débit de transmission, les systèmes de communication ajustent les paramètres de transmission et plus particulièrement le type de modulation. Ainsi, l'augmentation de débit nécessite d'augmenter le nombre d'états de la modulation. Mais, plus le nombre d'états est important plus les données transmises sont sensibles aux variations du canal et au bruit. Les données transmises peuvent alors être trop bruitées et nécessiter d'être retransmise ce qui diminue le débit de transmission. D'autres solutions doivent par conséquent être utilisées, éventuellement conjointement, pour augmenter le débit de transmission.

Le document EP 1 780 966 A1 (FUJITSU LTD [JP]) 2 mai 2007 (2007-05-02), décrit un procédé d'émission de trames temps fréquence comprenant la transmission de pilotes codés avec des informations supplémentaires.

### Exposé de l'invention

Toutes les termes "mode de réalisation" dans la description doivent être considérés comme "aspects de l'invention", l'invention étant définie parmi les revendications indépendantes attachés.

L'invention propose une technique d'émission et une technique de réception d'un signal multi porteuses de type OFDM permettant d'améliorer la capacité de transmission d'un système multi porteuses.

Ainsi, l'invention a pour objet un procédé d'émission de trames temps fréquence comprenant :
- une étape de mise en trame et de mappage de symboles de données en entrée d'un multiplexeur multi porteuse,
- une étape de mise en forme de pilotes selon une modulation donnée à plusieurs états, connue d'un récepteur des trames, l'état de modulation des pilotes étant choisi en fonction de données non connues du récepteur et de règles de codage connues du récepteur.
- une étape d'insertion de pilotes, préalablement mis en formes, de manière répartie dans la trame mappée.

L'invention a en outre pour objet un émetteur multi porteuse de trames temps fréquence comprenant des données et des pilotes, adapté pour la mise en oeuvre d'un procédé d'émission selon l'invention.

Ainsi, un émetteur selon l'invention comprend :
- un module de multiplexage multi porteuse générant des symboles multi porteuse,
- un module pour moduler les pilotes selon une modulation donnée à plusieurs états, connue d'un récepteur des trames et pour insérer ces pilotes en entrée du module de multiplexage multi porteuse, adapté pour choisir l'état de modulation de pilotes répartis dans la trame en fonction de données non connues du récepteur et de règles de codage connues du récepteur.

Le procédé et l'émetteur conformes à l'invention résolvent le problème posé. En effet, le choix de l'état de modulation en fonction de données et de règles de codage, permet de transmettre des données au moyen des pilotes répartis. Ainsi, en utilisant les pilotes répartis pour coder des données, un procédé selon l'invention permet d'améliorer le débit de transmission en augmentant la capacité.

Par exemple, lorsque la modulation utilisée à l'émission pour les pilotes est une BPSK, l'émetteur a le choix entre deux positions possibles pour chaque pilote émis : (+1,0) et (-1,0). Les deux positions possibles permettent donc à l'émetteur de coder deux états soit l'équivalent d'un bit. Les règles de codage font le lien entre les états et les données à coder. Par exemple, les règles peuvent être de coder la donnée un avec l'état de modulation (+1,0) et la donnée zéro avec l'état de modulation (-1,0). Lorsque la modulation est une QPSK, l'émetteur a le choix entre quatre positions possibles pour chaque pilote émis : (+1.0), (0.1), (-1,0) et (0,-1). Les quatre positions possibles permettent donc à l'émetteur de coder quatre états soit l'équivalent de deux bits. Lorsque la modulation est une 16QAM, l'émetteur a le choix entre seize positions possibles pour chaque pilote émis. Les seize positions possibles permettent à l'émetteur de coder seize états soit l'équivalent de quatre bits. Lorsque la modulation est une 64QAM, l'émetteur a le choix entre soixante quatre positions possibles pour chaque pilote émis. Les soixante quatre positions possibles permettent à l'émetteur de coder soixante quatre états soit l'équivalent de six bits. Le codage des pilotes selon l'invention permet d'augmenter le débit de transmission d'un nombre de bits fonction de la modulation utilisée pour la modulation des pilotes, par exemple un bit pour une BPSK et six bits pour une 64QAM.

Dans une trame OFDM classique, il existe couramment un symbole OFDM pilote qui permet d'effectuer une première estimation du canal de transmission.

Ce symbole OFDM n'est pas utilisé pour coder une information selon l'invention. Seuls les pilotes répartis dans la trame sont utilisés. Selon un mode particulier de réalisation de l'invention, seuls certains pilotes répartis sont utilisés pour coder des données non connues du récepteur.

Selon un mode de réalisation particulier, un procédé d'émission est tel qu'au moins certaines des données non connues du récepteur correspondent à une information de codage de détection ou de correction d'erreur de transmission.

Ce mode de réalisation est particulièrement avantageux car il permet de détecter très en amont dans la chaîne de réception une erreur sur les données binaires transmises. Selon les techniques connues, seul le champ FCS de la trame MAC permet de détecter une erreur de transmission sur la trame TR PHY transmise et de demander à l'émetteur via une voie de retour de retransmettre la trame erronée. Selon ces techniques, la détection d'erreur de transmission est gérée au niveau de la couche MAC qui appartient à la couche de niveau deux : le récepteur doit avoir reçu et décodé toute la trame MAC pour pouvoir détecter une erreur de transmission et déterminer si la trame physique TR PHY reçue doit être jetée du fait de l'erreur détectée. Contrairement aux techniques déployées couramment par l'homme du métier, un procédé selon l'invention permet de détecter très tôt dans la chaîne de réception une erreur de transmission puisque l'erreur peut être détectée en décodant l'information transmise sur les pilotes, donc au niveau binaire, c'est-à-dire au niveau de la couche physique qui appartient à la couche de niveau un. Typiquement, dans le cas d'une modulation BPSK utilisée pour les pilotes, l'information d'erreur codée peut être une information de parité. Lorsque la modulation est plus évoluée, le codage d'erreur peut être lui aussi plus évolué puisque le nombre d'états pour coder l'information est plus important. En fonction des modes de réalisation, seuls certains pilotes peuvent être utilisés pour coder une information de codage d'erreur. La répartition des pilotes dans la trame binaire détermine la récurrence maximale du codage d'erreur de transmission au sein d'une trame. En fonction des modes de réalisation, le codage permet en outre une correction de l'erreur détectée.

Selon un mode de réalisation particulier, un procédé d'émission est tel qu'au moins certaines des données non connues du récepteur correspondent à une information permettant d'améliorer la qualité de service des flux échangés entre l'émetteur et le récepteur et/ou entre le récepteur et l'émetteur.

Ce mode de réalisation est particulièrement avantageux lorsqu'une trame transmet des données sur la quantité d'information (taille des buffers) restant à transmettre et sur la priorité de cette information. Le récepteur peut alors mettre en place des mécanismes dans le but de respecter les contraintes de qualité de service de ces paquets d'information à transmettre (par exemples : calcul de TXOP en voies montante et descendante (cas d'un système 802.11x), mécanisme d'ordonnancement (scheduling), optimisation de la gestion des files d'attente des paquets (queuing)).

L'invention a en outre pour objet un procédé de réception de trames temps fréquence comprenant des données et des pilotes, des pilotes répartis codant des données non connues de la réception, comprenant les étapes :
- de comparaison dans l'espace i,q de la position d'un pilote réparti reçu avec les positions possibles des pilotes pour en déduire la position du pilote réparti émis connaissant la modulation utilisée à l'émission et
- de détermination, à partir de la position du pilote réparti émis, de la donnée codée par ce pilote connaissant la règle de codage utilisée à l'émission.

L'invention a en outre pour objet un récepteur de trames temps fréquence comprenant des données et des pilotes, des pilotes répartis dans la trame codant des données non connues du récepteur, adapté pour la mise en oeuvre d'un procédé de réception selon l'invention.

Ainsi, un récepteur selon l'invention comprend :
- un comparateur adapté pour comparer dans l'espace i,q la position d'un pilote réparti reçu avec les positions possibles des pilotes pour en déduire la position du pilote réparti émis connaissant la modulation utilisée à l'émission et pour déterminer, à partir de la position du pilote réparti émis, la donnée codée par ce pilote connaissant la règle de codage utilisée à l'émission.

Connaissant la modulation utilisée à l'émission pour les pilotes, le procédé détermine l'ensemble des positions possibles de la constellation dans l'espace (i,q) que peuvent occuper les pilotes. Le procédé compare le pilote réparti reçu avec les différentes positions possibles. La position possible la plus proche de la position du pilote réparti reçue correspond à la position du pilote réparti émis. La détermination de la position du pilote réparti émis permet d'en déduire la valeur de la donnée codée par ce pilote connaissant la règle de codage utilisée à l'émission. Par exemple, lorsque la modulation utilisée à l'émission pour les pilotes est une BPSK, l'émetteur a le choix entre deux positions possibles pour chaque pilote émis : (+1,0) et (-1,0). La règle de codage peut consister à coder la valeur un par le choix du pilote (+1,0) et la valeur zéro par le choix du pilote (-1,0). Si la position (+1,0) est la plus proche de la position du pilote reçu alors le procédé en déduit à partir de sa connaissance de la règle de codage que la donnée codée est un. Si la position (-1,0) est la plus proche de la position du pilote reçu alors le procédé en déduit à partir de sa connaissance de la règle de codage que la donnée codée est zéro.

Selon un mode de réalisation particulier, un procédé de réception est tel que l'étape de comparaison utilise des zones de décision autour de chaque position possible des pilotes.

L'utilisation de zones de décision autour des positions possibles des pilotes permet avantageusement de prendre en compte un niveau de bruit et d'émettre un message de retour à l'émetteur lorsque la position reçue d'un pilote n'appartient à aucune région de décision. Ce message de retour peut déclencher chez l'émetteur un changement de type de modulation pour les pilotes et le choix d'une modulation plus robuste pour protéger plus efficacement les pilotes du bruit.

Selon un mode de réalisation particulier, un procédé de réception est tel que :
- les données codées par les pilotes répartis transmettent une information de codage d'erreur de transmission et,
- lorsque la donnée codée associée à un pilote réparti code une erreur alors le récepteur génère un message d'erreur de trame.

Ce mode de réalisation est particulièrement avantageux car il permet de détecter très en amont dans la chaîne de réception une erreur sur les données binaires transmises. Selon les techniques connues, seul le champ FCS de la trame MAC permet au récepteur de détecter une erreur de transmission sur la trame TR PHY transmise et de demander à l'émetteur via une voie de retour de retransmettre la trame erronée. Selon ces techniques, la détection d'erreur de transmission est gérée au niveau de la couche MAC qui appartient à la couche de niveau deux : le récepteur doit avoir reçu et décodé toute la trame MAC pour pouvoir détecter une erreur de transmission et déterminer si la trame reçue doit être jetée du fait de l'erreur détectée. Contrairement aux techniques déployées couramment par l'homme du métier, un procédé selon l'invention permet de détecter très tôt dans la chaîne de réception une erreur de transmission puisque l'erreur peut être détectée en décodant l'information transmise sur les pilotes répartis, soit au niveau binaire, c'est-à-dire au niveau de la couche physique qui appartient à la couche de niveau un. Le récepteur n'a plus besoin d'attendre d'avoir décodé toute la trame MAC avant de pouvoir générer un message de retour destiné à l'émetteur l'informant que la trame est erronée et lui demandant éventuellement de renvoyer la trame. Typiquement, dans le cas d'une modulation BPSK utilisée pour les pilotes, l'information codée peut être une information de parité. Lorsque la modulation est plus évoluée, le codage d'erreur peut être lui aussi plus évolué puisque le nombre d'états pour coder l'information est plus important. La répartition des pilotes dans la trame binaire détermine la récurrence maximale du codage d'erreur de transmission au sein d'une trame.

Les différents modes de réalisation précédents peuvent être combinés ou pas avec un ou plusieurs de ces modes pour définir un autre mode de réalisation.

L'invention a en outre pour objet un système de télécommunication adapté pour la mise en oeuvre d'un procédé selon l'invention.

Ainsi, un système de télécommunication selon l'invention, comprend un émetteur ou un récepteur selon l'invention.

L'invention a en outre pour objet un système de télécommunication MIMO comprenant des émetteurs multi porteuse émettant une trame temps fréquence comprenant des données et des pilotes, chaque émetteur comprenant :
- un module de multiplexage multi porteuse générant des symboles multi porteuse et,
- un module pour moduler les pilotes selon une modulation donnée à plusieurs états connue d'un récepteur des trames et pour insérer ces pilotes en entrée du module de multiplexage multi porteuse, adapté pour choisir l'état de modulation de pilotes répartis dans la trame en fonction de données non connues du récepteur et de règles de codage connues du récepteur, les données étant spécifiques d'un flux transmis par l'émetteur.

Selon une implémentation préférée, les étapes du procédé d'émission, respectivement de réception, selon l'invention sont déterminées par les instructions d'un programme d'émission, respectivement de réception, incorporé dans un circuit électronique telle une puce elle-même pouvant être disposée dans un dispositif électronique tel un émetteur, respectivement un récepteur. Le procédé d'émission, respectivement de réception, selon l'invention peut tout aussi bien être mis en oeuvre lorsque ce programme est chargé dans un organe de calcul tel un processeur ou équivalent dont le fonctionnement est alors commandé par l'exécution du programme.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

Alternativement, le support d'informations peut être un circuit intégré dans lequel le programme est incorporé, le circuit étant adapté pour exécuter ou pour être utilisé dans l'exécution du procédé en question.

D'autre part, le programme peut être traduit en une forme transmissible telle qu'un signal électrique ou optique, qui peut être acheminé via un câble électrique ou optique, par radio ou par d'autres moyens. Le programme selon l'invention peut être en particulier téléchargé sur un réseau de type Internet.

### Liste des figures

D'autres caractéristiques et avantages de l'invention apparaîtront lors de la description qui suit faite en regard de figures annexées données à titre d'exemples non limitatifs.
La figure 1 est une représentation schématique de la structure d'une trame de la couche physique de niveau un et de la trame correspondante de la couche MAC de niveau deux.
La figure 2 est une représentation schématique d'une trame temps fréquence typiquement OFDM comprenant un symbole OFDM pilote.
Les figures 3a-3d sont des représentations de Fresnel des constellations associées respectivement aux modulations BPSK, QPSK, 16QAM et 64QAM.
La figure 4 est un schéma illustrant une infrastructure BSS (basic service set) de stations STA 1, STA2 d'un système radio sans fil comprenant un point d'accès AP.
La figure 5 est une représentation schématique de l'acquittement d'une trame selon les techniques connues et plus particulièrement décrites dans le standard 802.11.
La figure 6 est une représentation schématique en blocs fonctionnels d'un système de télécommunication.
Les figures 7a et 7b illustre un pilote modulé par une BPSK respectivement avant émission et après émission.
La figure 8 est un organigramme d'un procédé d'émission de trames temps fréquence comprenant des données et des pilotes émis par un émetteur multi porteuse, selon l'invention.
La figure 9 est une représentation schématique en blocs fonctionnels d'un émetteur EMa selon l'invention.
La figure 9a est une loupe du module PILa de l'émetteur de la figure 9.
La figure 10 est un organigramme d'un procédé de réception selon l'invention.
Les figures 11a-11d illustrent une mise en oeuvre particulière avec une modulation BPSK d'un procédé de réception selon l'invention.
La figure 12 est un schéma en blocs fonctionnels d'un exemple de récepteur adapté pour anticiper la détection d'une erreur de transmission de trame par rapport à l'art antérieur.

### Description d'un mode de réalisation de l'invention

En référence à la figure 4, une station STA1 accède à un réseau sans fil au moyen du point d'accès AP.

La station STA1 s'est préalablement associée avec le point d'accès AP et éventuellement authentifiée auprès de ce point d'accès selon des procédures connues.

La station STA1 émet des données que le point d'accès transfère vers un destinataire non représenté. En référence à la figure 1, le champ de données PSDU est encapsulé dans une trame TR PHY correspondant à la couche physique de niveau 1 qui débute typiquement par un en-tête PHY HDR et se termine par un champ tail qui sert à boucler le treillis de l'algorithme de codage, suivi d'un champ pad qui permet de faire du bourrage.

Au niveau de la couche MAC de niveau 2, le champ de données PSDU de la trame physique correspond à la trame dite MAC. La trame MAC se décompose en un entête MAC HDR, un champ données MSDU, et un champ FCS, typiquement selon les spécifications de la sous couche de convergence PLCP (Physical layer convergence protocol) des spécifications MAC du standard 802.11x décrites dans le document 802.11-2007.

Selon des techniques connues et plus particulièrement décrites dans le standard 802.11, l'acquittement d'une trame de données est généré au niveau de la couche MAC du récepteur. Le récepteur acquitte une trame quand le champ FCS est correct. Le récepteur attend un inter trame noté SIFS avant de pouvoir émettre une trame d'acquittement comme illustré par la figure 5. Lorsque le champ FCS n'est pas correct, le récepteur n'émet pas de trame d'acquittement. L'émetteur émet de nouveau une trame en l'absence de retour d'un message d'acquittement à l'expiration d'un compteur déclenché lors de l'émission de la trame.

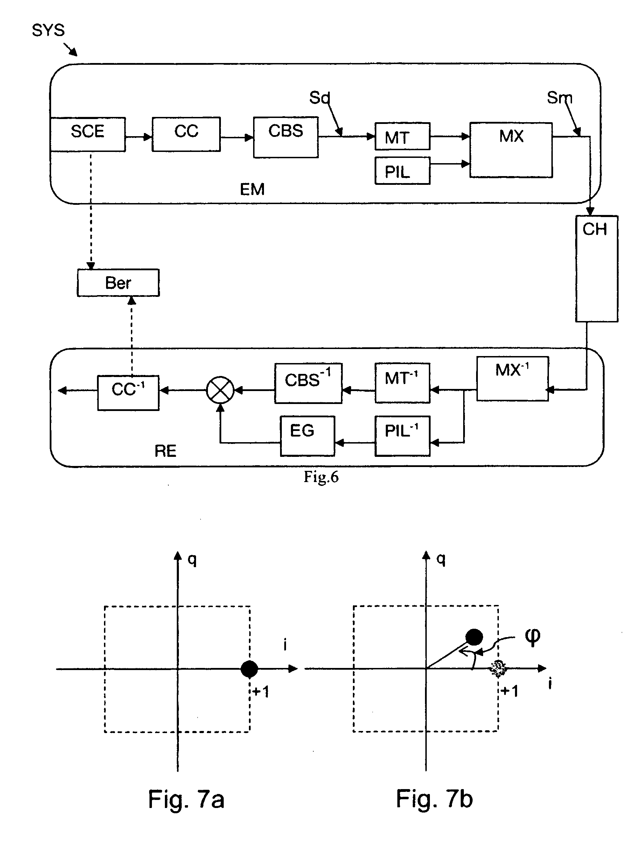

Au niveau de la couche physique de niveau 1, les traitements correspondants à une trame physique sont décrits à l'appui de la figure 6. Cette figure 6 est une représentation schématique en blocs fonctionnels d'un système de télécommunication.

Ce système est décrit en bande de base, en relation avec la couche physique. Ce système comprend un émetteur EM et un récepteur RE. Le signal émis Sm par l'émetteur est transmis au récepteur par un canal de transmission CH.

La chaîne d'émission de l'émetteur comprend un codeur CC, un modulateur CBS, un module MT de mise en trame, un module PIL d'insertion de pilotes, un module MX de multiplexage multi porteuse dit indifféremment multiplex MX.

Les données d'entrée de la chaîne sont issues d'une source d'information SCE. La source correspond par exemple à un signal de parole, à un fichier de données, à des images vidéo. Le codeur CC ajoute de la redondance aux données binaires d'entrée, en particulier pour lutter contre les distorsions introduites par le canal de propagation. Les données codées sont mises en forme par le modulateur CBS sous forme de symboles de données. Cette mise en forme utilise une modulation telle qu'une BPSK, QPSK, 16QAM, 64QAM, etc. pour obtenir les symboles de données. Les symboles de données sont mis en trame et mappés en entrée du multiplex MX par le module de mise en trame MT. Le module PIL met en forme les pilotes et les insère dans la trame mappée en entrée du multiplex. La mise en forme des pilotes consiste selon des techniques connues à générer une séquence pseudo aléatoire au moyen d'un générateur pseudo aléatoire et à moduler cette séquence avec une modulation typiquement BPSK. Le multiplex MX transforme les données mappées sur ces entrées, en utilisant typiquement une transformée de Fourier inverse, en un symbole multi porteuse, par exemple de type OFDM (Orthogonal Frequency Division Multiplexing). Le signal émis est constitué des symboles multi porteuse Sm.

Le procédé d'émission insère donc des pilotes sur des sous porteuses dites pilotes. Les pilotes sont généralement le résultat de la modulation d'une séquence aléatoire ou pseudo aléatoire connues du récepteur par une modulation de type BPSK (+/- 1) pour ne pas impacter le PAPR (Peak to Average Power Ratio). Les pilotes permettent d'estimer à la réception les rotations de phases et les distorsions générées par le décalage en fréquence des oscillateurs locaux et par le bruit de phase. En effet, le récepteur peut estimer l'écart sur la constellation entre le pilote reçu et la position qu'il devrait avoir puisqu'il connaît la modulation et la séquence pseudo aléatoire utilisée à l'émission, ce qui lui permet de mettre à jour la correction de phase.

La chaîne de réception du récepteur RE comprend un module MX⁻¹ de démultiplexage multi porteuse dit indifféremment démultiplex MX⁻¹, un module MT⁻¹ de détramage, un égaliseur EG, un module PIL⁻¹ d'extraction de pilotes, un démodulateur CBS⁻¹, un décodeur CC⁻¹. Le module MX⁻¹ de démultiplexage multi porteuse effectue la fonction inverse du module MX de multiplexage multi porteuse. Si ce dernier effectue une transformée de Fourier inverse alors classiquement le module MX⁻¹ effectue une transformation de Fourier directe. Le module MT⁻¹ de détramage effectue la fonction inverse du module MT de mise en trame. Le module PIL⁻¹ d'extraction de pilotes effectue la fonction inverse du module PIL d'insertion de pilotes. A partir des pilotes, le module EG d'égalisation détermine les coefficients du canal de transmission pour corriger les données des distorsions introduites par le canal. Le démodulateur CBS⁻¹ effectue la fonction inverse du modulateur CBS. Le décodeur CC⁻¹ effectue la fonction inverse du codeur CC.

L'exemple illustré par les figures 7a-7b correspond à une modulation BPSK des pilotes à l'émission. Le 1^{er} pilote émis correspond à la valeur 1 du générateur pseudo aléatoire et occupe la position de la constellation (+1,0), figure 7a. Le récepteur sait que le pilote reçu doit être un +1 puisque le récepteur utilise le même générateur pseudo aléatoire qu'à l'émission et que, par conséquent, sa position doit être (+1,0). Le pilote reçu, figure 7b, occupe toutefois une position sur la constellation dans l'espace (i,q) différente de la position attendue (+1,0) du fait des distorsions introduites par le canal. L'écart entre les deux positions permet d'obtenir simplement une estimation de l'erreur de phase ϕ et éventuellement de l'erreur d'amplitude sur le pilote reçu et de mettre à jour la correction de phase utilisée lors de l'égalisation.

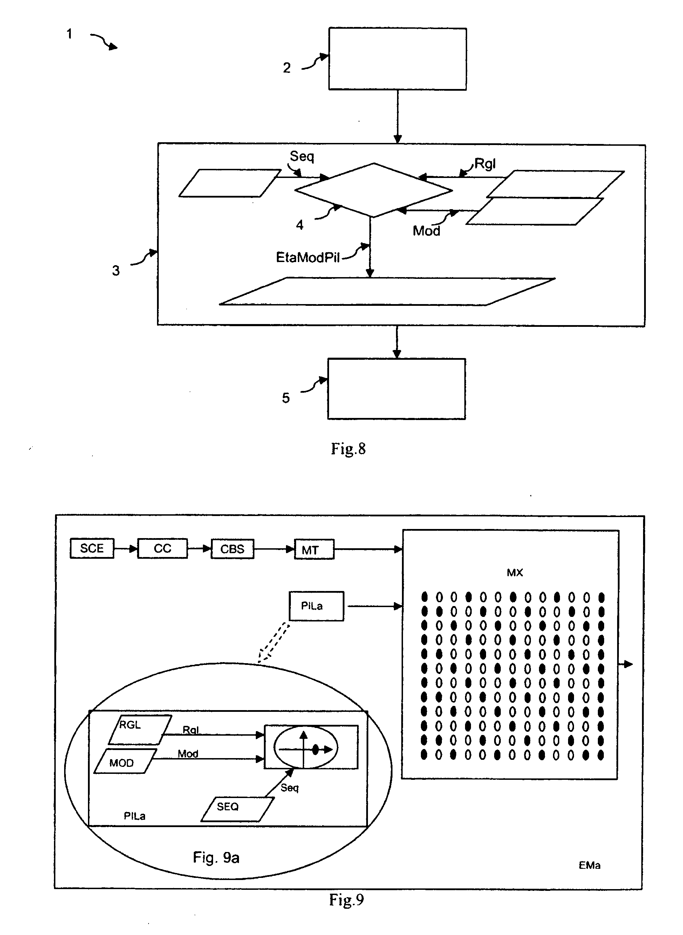

La figure 8 est un organigramme d'un procédé d'émission de trames temps fréquence comprenant des données et des pilotes émis par un émetteur multi porteuse, selon l'invention. Le procédé 1 d'émission comprend les étapes :
- de mise 2 en trame et de mappage de symboles de données en entrée d'un multiplexeur multi porteuse,
- de mise 3 en forme de pilotes selon une modulation donnée Mod à plusieurs états, connue d'un récepteur des trames, l'état de modulation EtaModPil des pilotes étant choisi 4 en fonction de données Seq non connues du récepteur et de règles Rgl de codage connues du récepteur,
- d'insertion 5 des pilotes dans la trame mappée.

La figure 9 est une représentation schématique en blocs fonctionnels d'un émetteur EMa selon l'invention. Par rapport à l'émetteur connu décrit en regard de la figure 6, l'émetteur est adapté en ce qu'il comprend un module de mise en forme et d'insertion de pilotes adapté, PILa, pour la mise en oeuvre d'un procédé selon l'invention. Le module PILa est détaillé dans la loupe correspondant à la figure 9a, il met en oeuvre les étapes 3 et 5 du procédé d'émission illustré par la figure 8. Le module PILa met 3 en forme des pilotes selon une modulation Mod à plusieurs états, fournie typiquement par un module de bibliothèque de modulation MOD, connue d'un récepteur des trames. Pour un pilote donné, le module PILa choisit 4 l'état de modulation EtaModPil en fonction de la valeur d'une donnée Seq non connue du récepteur fournie par un module SEQ et de règles Rgl de codage connues du récepteur, fournies par un module RGL. Le module PILa insère les pilotes mis en forme dans la trame mappée en entrée du multiplex MX.

Selon un mode de réalisation, tous les pilotes répartis dans la trame temps fréquence sont mis en forme selon ce procédé par le module PILa.

Selon un autre mode de réalisation, seuls certains des pilotes répartis dans la trame temps fréquence sont mis en forme selon ce procédé par le module PILa. Dans ce cas, les autres pilotes répartis sont mis en forme par le module PILa selon un procédé connu, typiquement en utilisant une séquence pseudo aléatoire connue du récepteur.

Selon un mode de réalisation, le module PILa insère en outre dans la trame un ou plusieurs symboles pilotes mis en forme selon des techniques connues, c'est-à-dire que le récepteur connaît la séquence pseudo aléatoire utilisée à l'émission.

Selon l'invention, le procédé 1 d'émission émet sur les sous porteuses pilotes, une séquence d'information inconnue du récepteur contrairement à l'art antérieur selon lequel la séquence pseudo aléatoire est connue de la réception. Par contre, le récepteur connaît la modulation utilisée pour la séquence d'information inconnue ainsi que la règle de codage utilisée à l'émission pour coder la séquence d'information. La modulation est généralement une BPSK, donc une modulation à deux états +1 et -1. mais ce peut être une autre modulation telle une QPSK ou une 16QAM.

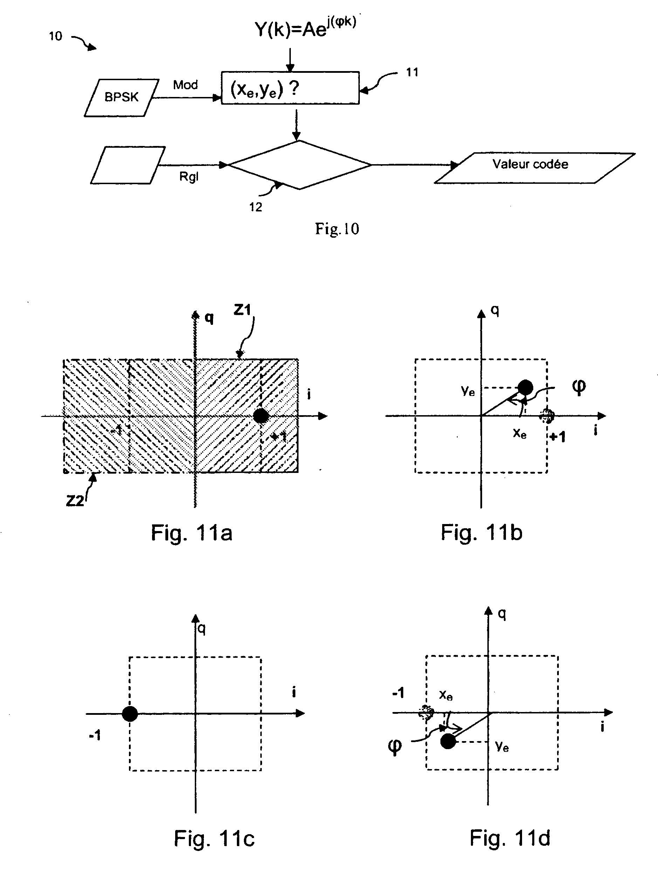

Les figures 10,11a-11d illustrent un procédé 10 de réception selon l'invention.

A partir de la donnée reçue Y(k) correspondant à un pilote, le récepteur détermine 11 la position (xₑ, yₑ) correspondante du pilote émis connaissant les états possibles de la modulation Mod ((+1,0):(-1,0) avec une modulation BPSK). Le récepteur détermine 12 la valeur codée par le pilote connaissant la règle Rgl de codage utilisée à l'émission puis il estime la rotation de phase et la distorsion.

Selon un mode de réalisation, le récepteur compare le pilote reçu égalisé avec l'estimation de canal calculé avec les préambules à un ou plusieurs seuils ou zones de décision.

Dans le cas d'une modulation BPSK utilisée pour les pilotes à l'émission, figure 11a, les zones Z1 et Z2 peuvent typiquement être délimitées par l'axe q de la constellation. La zone Z1 correspond à la plage ]-π/2; +π/2[ et la zone Z2 correspond à la plage]+π/2; -π/2[. Selon ces seuils ou zones de décision, le procédé compare la phase du pilote reçue à la plage ]-π/2; +π/2[ et à la plage ]+π/2; -π/2[. Si la phase est comprise dans la plage]-π/2; +π/2[ alors le pilote émis occupe la position (+1, 0), figure 11b. Si la règle de codage utilisée à l'émission associe la valeur un à la position (+1, 0) alors la valeur décodée a donc la valeur +1. Si la phase est comprise dans la plage ]+π/2; -π/2[ alors le pilote émis occupe la position (-1, 0), figure 11c. Si la règle de codage utilisée à l'émission associe la valeur zéro à la position (-1, 0) alors la valeur décodée a donc la valeur zéro.

Donc, bien qu'il ne connaisse pas la position du pilote à l'émission, le récepteur peut détecter et identifier cette position connaissant la modulation utilisée et en déduire la valeur codée par le pilote connaissant la règle de codage utilisée à l'émission. Connaissant la position de la constellation lors de l'émission, le procédé estime selon des techniques connues la rotation de phase et la distorsion sur la position du pilote reçu, figure 11b et figure 11d.

Quelle que soit la constellation, les zones de décision sont disjointes et contiennent chacune un seul état. Pour une QPSK, il y a quatre zones typiquement délimitées par les axes i et q de la constellation.

Lorsque la rotation de phase et la distorsion sur la position du pilote reçu sont faibles comparativement aux frontières de la zone de décision alors l'émetteur peut choisir de changer de modulation pour les pilotes et faire le choix d'une modulation à un plus grand nombre d'états. Le choix de la modulation doit être tel que chacune des zones de décision à la réception englobent la position du pilote émis et la position du pilote reçu correspondant, c'est-à-dire que malgré la rotation de phase et les distorsions introduites par le canal, le pilote reçu reste dans la zone de décision qui entoure la position du pilote émis.

Si la rotation de phase est importante, il est alors préférable de ne pas utiliser toutes les porteuses pilotes d'un symbole OFDM pour transmettre de l'information selon l'invention et de conserver une partie de ces sous-porteuses pour estimer essentiellement le décalage de phase et d'amplitude. Dans ces conditions, des modulations différentielles peuvent être utilisées pour coder l'information.

Selon un mode de réalisation, un procédé selon l'invention permet avantageusement d'anticiper la détection d'une erreur de transmission de trame par rapport à la technique précédemment décrite en regard de la figure 5.

Selon ce mode, les données codées par les pilotes transmettent une information de codage d'erreur de transmission. Lorsque la donnée codée associée à un pilote code une erreur alors le récepteur peut envoyer un message d'erreur de trame à l'émetteur de cette trame.

La trame temps fréquence peut ne comporter qu'un pilote par symbole multi porteuse. Le pilote code alors par exemple la parité du symbole multi porteuse. Dans le cas d'une modulation BPSK, les pilotes codent par exemple un bit de parité. Soit un système de télécommunication configuré avec 52 porteuses et une modulation BPSK associée avec un codeur de rendement ½. Les 52 porteuses de données permettent de coder 26 bits de données issues de la source SCE, par symbole OFDM. La modulation BPSK est également choisie pour moduler une porteuse pilote qui code sur un bit selon l'invention une parité calculée sur les 26 bit de données.

S'il y a plusieurs pilotes dans un même symbole multi porteuse, alors selon un mode de réalisation, un pilote peut ne pas être utilisé par l'invention et chaque autre pilote peut être dédié pour coder la parité d'un flux. Dans ce cas, des modulations cohérentes classiques peuvent être utilisées mais également des modulations différentielles (DBPSK, DQPSK, Q16QAM, D64QAM).

S'il y a plusieurs pilotes dans un même symbole multi porteuse, alors selon un autre mode de réalisation, chaque pilote peut être dédié pour coder la parité d'un flux. Dans ce cas, si les distorsions subies par les pilotes sont uniquement des décalages de phase, alors des modulations d'amplitudes sur un seul axe peuvent être utilisées comme les modulations ASK (amplitude shift keying). Sinon des modulations cohérentes classiques peuvent être utilisées.

Soit un système de télécommunication MIMO configuré avec 52 porteuses et une modulation BPSK associée avec un codeur de rendement ½. Les 52 porteuses de données permettent de coder 26 bits de données issues de la source SCE, par symbole OFDM. La modulation BPSK est également choisie pour moduler une porteuse pilote qui code selon l'invention sur un bit une parité calculée sur les 26 bit de données. Les sous porteuses pilotes - 21, -7, 7 et 21 permettent de coder une parité sur 1 bit jusqu'à 4 flux spatiaux (MIMO 4x4) : la porteuse pilote -21 code la parité du flux N°1, la porteuse pilote -7 code la parité du flux N°2, la porteuse pilote 7 code la parité du flux N°3 et la porteuse pilote 21 code la parité du flux N°4. Les valeurs des pilotes sont données dans le tableau 1 en annexe 1. La règle de codage est la suivante : la valeur zéro correspond à l'état de modulation (1,0) et la valeur un correspond à l'état de modulation (-1,0).

Soit un système de télécommunication MIMO configuré avec 52 porteuses et une modulation 64QAM associée avec un codeur de rendement 5/6. Les 52 porteuses de données permettent de coder 260 bits de données issues de la source SCE, par symbole OFDM. La modulation QPSK est choisie pour moduler une porteuse pilote qui code selon l'invention un contrôle de parité (cheksum) de 2 bits calculé sur les 260 bit de données. Les sous porteuses pilotes -21, -7, 7 et 21 permettent de coder un cheksum de 2 bits jusqu'à 4 flux spatiaux (MIMO 4x4) : la porteuse pilote -21 code le cheksum du flux N°1, la porteuse pilote -7 code le cheksum du flux N°2, la porteuse pilote 7 code le cheksum du flux N°3 et la porteuse pilote 21 code le cheksum du flux N°4. Les valeurs des pilotes sont données dans le tableau 2 en annexe 1. La règle de codage est la suivante, la valeur (00) correspond à l'état de modulation (1,0), la valeur (0,1) correspond à l'état de modulation (1,+j), la valeur (10) correspond à l'état de modulation (-1, 0), la valeur (1,1) correspond à l'état de modulation (-1,-j).

Selon un autre mode de réalisation, s'il y a plusieurs pilotes dans un même symbole multi porteuse, alors, l'ensemble des pilotes peut coder le résultat du checksum calculé sur l'ensemble des flux spatiaux du symbole OFDM.

Selon un autre mode de réalisation, s'il y a plusieurs pilotes dans un même symbole multi porteuse, alors, le résultat du checksum calculé sur l'ensemble des flux spatiaux du symbole OFDM peut être dupliqué sur chaque porteuse pilote pour renforcer la robustesse de la détection de l'information codée par les pilotes.

Ainsi, le récepteur compare la parité des données reçues à la parité codée par les pilotes. La figure 12 est un schéma en blocs fonctionnels d'un exemple de récepteur adapté pour anticiper la détection d'une erreur de transmission de trame par rapport à l'art antérieur.

Par rapport à un récepteur de l'art antérieur illustré par la figure 6, le récepteur comprend en outre un module PILa⁻¹ pour mettre en oeuvre un procédé de réception illustré par les 10,11a-11d. Le récepteur comprend en outre un module CHECK. Ce module compare la donnée décodée Dseq par le module PILa⁻¹ avec la valeur de checksum calculée sur les données décodées Dod issues du décodeur CC⁻¹, données Dod auxquelles correspond la séquence décodée Dseq. Par exemple, les données décodées Dod comparées par le module CHECK à la donnée Dseq correspondent à un symbole OFDM et la séquence décodée Dseq correspond à la parité du symbole OFDM. Quand il n'y a pas d'égalité, le récepteur en déduit qu'il y a eu une erreur de transmission, il peut par conséquent émettre un message Nack de retour à l'émetteur l'informant d'une erreur de transmission.

Le message de retour d'erreur peut consister en une trame PLCP qui peut être envoyée à l'émetteur de cette trame de façon anticipée par rapport aux techniques connues qui nécessitent de décoder le champ FCS au niveau de la couche de niveau 2. La mise en oeuvre de ce mode permet d'optimiser l'efficacité de la couche MAC car l'émetteur peut stopper la transmission d'une trame erronée plus rapidement qu'avec les techniques de l'art antérieur. Au lieu de détecter la non réception d'un message d'acquittement ACK, une trame PLCP indique explicitement l'erreur de transmission et permet de faire la retransmission rapidement (dans le même TXOP pour les files voix ou vidéo). Le gain peut être estimé avec les hypothèses suivantes : 10% de paquets erronés, taille moyenne des paquets de 1000 octets, erreur détectée en milieu de paquet (à l'octet 500). Pour une modulation MCS0, le gain est d'environ 350µs toutes les 15 ms soit un gain de 2.5%. Pour une modulation MCS7, le gain est d'environ 50µs toutes les 3.5ms soit un gain de 1.4%.

### Annexe 1

**Tableau 1**

| NSS | Parité des données du symbole OFDM | Pilot -21 | Pilot -7 | Pilot 7 | Pilot 21 |
|---|---|---|---|---|---|
| Flux 1 | 0 | (1, 0) | (1, 0) | (1, 0) | (1, 0) |
| | 1 | (-1, 0) | (1, 0) | (1, 0) | (1, 0) |
| Flux 2 | 0 | (1, 0) | (1, 0) | (1, 0) | (1, 0) |
| | 1 | (1, 0) | (-1, 0) | (1, 0) | (1, 0) |
| Flux 3 | 0 | (1, 0) | (1, 0) | (1, 0) | (1, 0) |
| | 1 | (1, 0) | (1, 0) | (-1, 0) | (1, 0) |
| Flux 4 | 0 | (1, 0) | (1, 0) | (1, 0) | (1, 0) |
| | 1 | (1, 0) | (1, 0) | (1, 0) | (-1,0) |

**Tableau 2**

| NSS | Parité des données du symbole OFDM | Pilot -21 | Pilot -7 | Pilot 7 | Pilot 21 |
|---|---|---|---|---|---|
| Flux 1 | 00 | (1, 0) | (1, 0) | (1, 0) | (1, 0) |
| | 01 | (1, +j) | (1, 0) | (1, 0) | (1, 0) |
| | 10 | (-1, 0) | (1, 0) | (1, 0) | (1, 0) |
| | 11 | (-1, -j) | (1, 0) | (1, 0) | (1, 0) |
| Flux 2 | 00 | (1, 0) | (1, 0) | (1, 0) | (1, 0) |
| | 01 | (1, 0) | (1, +j) | (1, 0) | (1, 0) |
| | 10 | (1, 0) | (-1, 0) | (1, 0) | (1, 0) |
| | 11 | (1, 0) | (-1, -j) | (1, 0) | (1, 0) |
| Flux 3 | 00 | (1, 0) | (1, 0) | (1, 0) | (1, 0) |
| | 01 | (1, 0) | (1, 0) | (1, +j) | (1, 0) |
| | 10 | (1, 0) | (1, 0) | (-1, 0) | (1, 0) |
| | 11 | (1, 0) | (1, 0) | (-1, -j) | (1, 0) |
| Flux 4 | 00 | (1, 0) | (1, 0) | (1, 0) | (1, 0) |
| | 01 | (1, 0) | (1, 0) | (1, 0) | (1, +j) |
| | 10 | (1, 0) | (1, 0) | (1, 0) | (-1, 0) |
| | 11 | (1, 0) | (1, 0) | (1, 0) | (-1, -j) |

## Revendications

1. Procédé (1) d'émission de trames temps fréquence comprenant :
- une étape (2) de mise en trame et de mappage de symboles de données en entrée d'un multiplexeur multi porteuse (MX),
- une étape de mise (3) en forme de pilotes selon une modulation donnée (Mod) à plusieurs états, connue d'un récepteur des trames, l'état de modulation (EtaModPil) des pilotes étant choisi (4) en fonction de données non connues du récepteur et de règles (Rgl) de codage connues du récepteur,
- une étape (5) d'insertion de pilotes, préalablement mis en formes, de manière répartie dans la trame mappée, **caractérisé en ce que** :
au moins certaines des données non connues du récepteur correspondent à une information de codage de détection d'erreur de transmission ou de correction d'erreur de transmission.

2. Procédé d'émission de trames temps fréquence selon la revendication 1, dans lequel au moins certaines des données non connues du récepteur correspondent à une information permettant d'améliorer la qualité de service des flux échangés entre l'émetteur et le récepteur et/ou entre le récepteur et l'émetteur.

3. Emetteur (EMa) multi porteuse de trames temps fréquence comprenant des données et des pilotes, comprenant :
- un module (MX) de multiplexage multi porteuse générant des symboles multi porteuse,
- un module (PILa) pour moduler les pilotes selon une modulation donnée à plusieurs états, connue d'un récepteur des trames et pour insérer ces pilotes en entrée du module (MX) de multiplexage multi porteuse,
le module (PILa) est adapté pour choisir l'état de modulation de pilotes répartis dans la trame en fonction de données non connues du récepteur **caractérisé en ce que** au moins certaines correspondent à une information de codage de détection d'erreur de transmission ou de correction d'erreur de transmission.

4. Procédé de réception de trames temps fréquence comprenant des données et des pilotes, des pilotes répartis dans la trame codant des données non connues du récepteur, comprenant les étapes :
- de comparaison dans l'espace i,q de la position d'un pilote réparti reçu avec les positions possibles des pilotes pour en déduire la position du pilote réparti émis connaissant la modulation utilisée à l'émission et
- de détermination, à partir de la position du pilote réparti émis, de la donnée codée par ce pilote connaissant la règle de codage utilisée à l'émission, **caractérisé en ce que** la donnée codée transmet une information de codage de détection d'erreur de transmission ou de correction d'erreur de transmission et, **en ce que** le procédé comprend :
- une étape de génération d'un message d'erreur de trame par le récepteur lorsque la donnée codée par ce pilote code une erreur.

5. Procédé de réception de trames temps fréquence selon la revendication précédente dans lequel la comparaison utilise des zones de décision autour de chaque position possible des pilotes.

6. Récepteur (RE) de trames temps fréquence comprenant des données et des pilotes, des pilotes répartis dans la trame codant des données non connues du récepteur, comprenant
- un comparateur adapté pour comparer dans l'espace i,q la position d'un pilote réparti reçu avec les positions possibles des pilotes pour en déduire la position du pilote réparti émis connaissant la modulation utilisée à l'émission et pour déterminer, à partir de la position du pilote réparti émis, la donnée codée par ce pilote connaissant la règle de codage utilisée à l'émission, **caractérisé en ce que** la donnée codée par le pilote réparti comprend une information de codage de détection d'erreur de transmission ou de correction d'erreur de transmission, le récepteur est adapté pour générer un message d'erreur de trame lorsque la donnée codée associée à un pilote réparti code une erreur.

7. Système de télécommunication comprenant un émetteur et/ou un récepteur selon l'une des revendications 3 et 6.

8. Système de télécommunication MIMO comprenant des émetteurs multi porteuse émettant une trame temps fréquence comprenant des données et des pilotes, chaque émetteur comprenant :
- un module (MX) de multiplexage multi porteuse générant des symboles multi porteuse et
- un module (PILa) pour moduler les pilotes selon une modulation donnée à plusieurs états, connue d'un récepteur des trames et pour insérer ces pilotes en entrée du module (MX) de multiplexage multi porteuse,
dans lequel le module (PILa) est adapté pour choisir l'état de modulation de pilotes répartis dans la trame en fonction de données non connues du récepteur dont au moins certaines correspondent à une information de codage de détection d'erreur de transmission ou de correction d'erreur de transmission, les données étant spécifiques d'un flux transmis par l'émetteur.

9. Programme d'ordinateur sur un support d'informations, ledit programme comportant des instructions de programme adaptées à la mise en oeuvre d'un procédé d'émission de trames de données selon l'une quelconque des revendications 1 à 2, lorsque ledit programme est chargé et exécuté dans un émetteur (EM) destiné à mettre en oeuvre un procédé d'émission de trames de données.

10. Support d'informations comportant des instructions de programme adaptées à la mise en oeuvre d'un procédé d'émission de trames de données, selon l'une quelconque des revendications 1 à 2, lorsque ledit programme est chargé et exécuté dans un émetteur (EM) destiné à mettre en oeuvre un procédé d'émission de trames de données.

## Patentansprüche

1. Verfahren (1) zum Senden von Zeit-Frequenz-Rahmen, das enthält:
- einen Schritt (2) der Rahmenbildung und der Abbildung von Datensymbolen am Eingang eines Mehrträger-Multiplexers (MX),
- einen Schritt der Formatierung (3) von Piloten gemäß einer gegebenen Modulation (Mod) mit mehreren Zuständen, die einem Empfänger der Rahmen bekannt ist, wobei der Modulationszustand (EtaModPil) der Piloten abhängig von dem Empfänger nicht bekannten Daten und von dem Empfänger bekannten Codierregeln (Rgl) ausgewählt wird (4),
- einen Schritt (5) der verteilten Einfügung von vorher formatierten Piloten in den abgebildeten Rahmen,
**dadurch gekennzeichnet, dass**:
mindestens bestimmte der dem Empfänger nicht bekannten Daten einer Übertragungsfehlererfassungs- oder
Übertragungsfehlerkorrektur-Codierinformation entsprechen.

2. Sendeverfahren von Zeit-Frequenz-Rahmen nach Anspruch 1, wobei mindestens bestimmte der dem Empfänger nicht bekannten Daten einer Information entsprechen, die es ermöglicht, die Dienstqualität der zwischen dem Sender und dem Empfänger und/oder zwischen dem Empfänger und dem Sender ausgetauschten Ströme zu verbessern.

3. Mehrträger-Sender (EMa) von Daten und Piloten enthaltenden Zeit-Frequenz-Rahmen, der enthält:
- ein Mehrträger-Multiplex-Modul (MX), das Mehrträger-Symbole erzeugt,
- ein Modul (PILa) zum Modulieren der Piloten gemäß einer gegebenen Modulation mit mehreren Zuständen, die einem Empfänger der Rahmen bekannt ist, und zum Einfügen dieser Piloten am Eingang des Mehrträger-Multiplex-Moduls (MX), wobei das Modul (PILa) geeignet ist, um den Modulationszustand von im Rahmen verteilten Piloten abhängig von dem Empfänger nicht bekannten Daten auszuwählen,
**dadurch gekennzeichnet, dass** mindestens bestimmte einer Übertragungsfehlererfassungs- oder Übertragungsfehlerkorrektur-Codierinformation entsprechen.

4. Empfangsverfahren von Daten und Piloten enthaltenden Zeit-Frequenz-Rahmen, wobei im Rahmen verteilte Piloten dem Empfänger nicht bekannte Daten codieren, das die folgenden Schritte enthält:
- Vergleich im Raum i,q der Position eines empfangenen verteilten Piloten mit den möglichen Positionen der Piloten, um daraus die Position des gesendeten verteilten Piloten abzuleiten, in Kenntnis der beim Senden verwendete Modulation, und
- Bestimmung, ausgehend von der Position des gesendeten verteilten Piloten, des von diesem Piloten codierten Datenwerts, in Kenntnis der beim Senden verwendeten Codierregel,
**dadurch gekennzeichnet, dass** der codierte Datenwert eine Übertragungsfehlererfassungs- oder eine Übertragungsfehler-Codierinformation überträgt, und dadurch, dass das Empfangsverfahren enthält:
einen Schritt der Erzeugung einer Rahmenfehlermitteilung durch den Empfänger, wenn der von diesem Piloten codierte Datenwert einen Fehler codiert.

5. Empfangsverfahren von Zeit-Frequenz-Rahmen nach dem vorhergehenden Anspruch, wobei der Vergleich Entscheidungszonen um jede mögliche Position der Piloten herum verwendet.

6. Empfänger (RE) von Daten und Piloten enthaltenden Zeit-Frequenz-Rahmen, wobei im Rahmen verteilte Piloten dem Empfänger nicht bekannte Daten codieren, der enthält
- einen Komparator, der geeignet ist, um im Raum i,q die Position eines empfangenen verteilten Piloten mit den möglichen Positionen der Piloten zu vergleichen, um daraus die Position des gesendeten verteilten Piloten abzuleiten, in Kenntnis der beim Senden verwendete Modulation, und um ausgehend von der Position des gesendeten verteilten Piloten den von diesem Piloten codierten Datenwert zu bestimmen, in Kenntnis der beim Senden verwendete Codierregel,
**dadurch gekennzeichnet, dass** der vom verteilten Piloten codierte Datenwert eine Übertragungsfehlererfassungs- oder Übertragungskorrektur-Codierinformation enthält, wobei der Empfänger geeignet ist, um eine Rahmenfehlermitteilung zu erzeugen, wenn der einem verteilten Piloten zugeordnete codierte Datenwert einen Fehler codiert.

7. Telekommunikationssystem, das einen Sender und/oder einen Empfänger nach einem der Ansprüche 3 und 6 enthält.

8. Telekommunikationssystem MIMO, das Mehrträger-Sender enthält, die einen Daten und Piloten enthaltenden Zeit-Frequenz-Rahmen senden, wobei jeder Sender enthält:
- ein Mehrträger-Multiplex-Modul (MX), das Mehrträger-Symbole erzeugt, und
- ein Modul (PILa) zum Modulieren der Piloten gemäß einer gegebenen Modulation mit mehreren Zuständen, die einem Empfänger der Rahmen bekannt ist, und zum Einfügen dieser Piloten am Eingang des Mehrträger-Multiplex-Moduls (MX),
wobei das Modul (PILa) geeignet ist, um den Modulationszustand von im Rahmen verteilten Piloten abhängig von dem Empfänger nicht bekannten Daten auszuwählen, von denen mindestens bestimmte einer Übertragungsfehlererfassungs- oder Übertragungsfehlerkorrektur-Codierinformation entsprechen, wobei die Daten für einen vom Sender übertragenen Strom spezifisch sind.

9. Computerprogramm auf einem Datenträger, wobei das Programm Programmanweisungen aufweist, die für die Durchführung eines Sendeverfahrens von Datenrahmen nach einem der Ansprüche 1 bis 2 geeignet sind, wenn das Programm in einen Sender (EM) geladen und ausgeführt wird, der dazu bestimmt ist, ein Sendeverfahren von Datenrahmen durchzuführen.

10. Datenträger, der Programmanweisungen aufweist, die für die Durchführung eines Sendeverfahrens von Datenrahmen nach einem der Ansprüche 1 bis 2 geeignet sind, wenn das Programm in einen Sender (EM) geladen und ausgeführt wird, der dazu bestimmt ist, ein Sendeverfahren von Datenrahmen durchzuführen.

## Claims

1. Method (1) for transmitting time-frequency frames comprising:
- a step (2) of framing and mapping data symbols at the input of a multi-carrier multiplexer (MX),
- a step (3) of formatting pilots according to a given multiple-state modulation (Mod), known to a receiver of the frames, the state of modulation (EtaModPil) of the pilots being chosen (4) as a function of data not known to the receiver and of coding rules (Rgl) known to the receiver,
- a step (5) of inserting pilots, previously formatted, in a distributed manner in the mapped frame, **characterized in that**:
at least some of the data not known to the receiver correspond to transmission error detection or transmission error correction coding information.

2. Method for transmitting time-frequency frames according to Claim 1, in which at least some of the data not known to the receiver correspond to information making it possible to improve the quality of service of the flows exchanged between the transmitter and the receiver and/or between the receiver and the transmitter.

3. Multi-carrier transmitter (EMa) of time-frequency frames comprising data and pilots, comprising:
- a multi-carrier multiplexing module (MX) generating multi-carrier symbols,
- a module (PILa) for modulating the pilots according to a given multiple-state modulation, known to a receiver of the frames, and for inserting these pilots at the input of the multi-carrier multiplexing module (MX),
the module (PILa) is adapted to choose the state of modulation of pilots distributed in the frame as a function of data not known to the receiver, **characterized in that** at least some correspond to transmission error detection or transmission error correction coding information.

4. Method for receiving time-frequency frames comprising data and pilots, pilots distributed in the frame coding data not known to the receiver, comprising the steps:
- of comparison in space i, q of the position of a distributed pilot received with the possible positions of the pilots in order to deduce therefrom the position of the transmitted distributed pilot knowing the modulation used in transmission and
- of determination, from the position of the transmitted distributed pilot, of the datum coded by this pilot knowing the coding rule used in transmission, **characterized in that** the coded datum transmits transmission error detection or transmission error correction coding information and **in that** the method comprises:,
- a step of generation of a frame error message by the receiver when the datum coded by this pilot codes an error.

5. Method for receiving time-frequency frames according to the preceding claim in which the comparison uses decision areas around each possible position of the pilots.

6. Receiver (RE) of time-frequency frames comprising data and pilots, pilots distributed in the frame coding data not known to the receiver, comprising:
- a comparator adapted to compare in space i, q the position of a received distributed pilot with the possible positions of the pilots in order to deduce therefrom the position of the transmitted distributed pilot knowing the modulation used in transmission and to determine, from the position of the transmitted distributed pilot, the datum coded by this pilot knowing the coding rule used in transmission, **characterized in that** the datum coded by the distributed pilot comprises transmission error detection or transmission error correction coding information, the receiver is adapted to generate a frame error message when the coded datum associated with a distributed pilot codes an error.

7. Telecommunication system comprising a transmitter and/or a receiver according to one of Claims 3 and 6.

8. MIMO telecommunication system comprising multi-carrier transmitters transmitting a time-frequency frame comprising data and pilots, each transmitter comprising:
- a multi-carrier multiplexing module (MX) generating multi-carrier symbols and
- a module (PILa) for modulating the pilots according to a given multiple-state modulation, known to a receiver of the frames, and for inserting these pilots at the input of the multi-carrier multiplexing module (MX),
in which the module (PILa) is adapted to choose the state of modulation of pilots distributed in the frame as a function of data not known to the receiver, at least some of which correspond to transmission error detection or transmission error correction coding information, the data being specific to a flow transmitted by the transmitter.

9. Computer program on an information medium, said program comprising program instructions adapted to implement a method for transmitting data frames according to any one of Claims 1 and 2, when said program is loaded and run in a transmitter (EM) intended to implement a method for transmitting data frames.

10. Information medium comprising program instructions adapted to implement a method for transmitting data frames, according to any one of Claims 1 and 2, when said program is loaded and run in a transmitter (EM) intended to implement a method for transmitting data frames.
